# EUROPEAN PATENT SPECIFICATION

(11) **EP 3 241 943 B1**
(45) Date of publication and mention of the grant of the patent: **11.09.2019**
(21) Application number: 16168076.4
(22) Date of filing: 03.05.2016
(51) Int. Cl.: D06F 58/20

(54) **HOUSEHOLD APPLIANCE COMPRISING A WATER/PROCESS AIR HEAT EXCHANGER**
HAUSHALTSGERÄT MIT EINEM WASSER/PROZESSLUFT-WÄRMETAUSCHER
APPAREIL MÉNAGER COMPRENANT UN ÉCHANGEUR DE CHALEUR À EAU/AIR DE PROCESSUS

(43) Date of publication of application: 08.11.2017
(73) Proprietor: BSH Hausgeräte GmbH, 81739 München (DE); BSH Electrodomésticos España, S.A., 50016 Zaragoza (ES)
(72) Inventor: Capablo Sese, Joaquin Jesus, 50003 Zaragoza (ES); San Martin Sancho, Roberto, 31200 Estella (ES)

(56) References cited:
- EP-A1- 2 067 890
- EP-A1- 2 562 306
- EP-A2- 1 382 916
- US-A1- 2013 008 049

## Description

The invention relates to a household appliance, comprising a process air circuit for circulating process air, the process air circuit comprising a treatment chamber having an air inlet opening and an air outlet opening and a process air channel connecting the openings, and the household appliance comprising a water/process air heat exchanger adapted to cool the process air flowing within the process air channel. The invention is particularly useful for a laundry care apparatus, in particular for a clothes washer/dryer combination or washing machine with drying function ("washer-dryer"), in particular having a heat pump.

One kind of known washer-dryers uses vented drying, i.e. drying by evacuating warm humid process air out of the washer-dryer. In this case, drying of the wet laundry or clothes takes place by applying a flow of dry and warm process air to the laundry which extracts water contained in the laundry. The process air to be applied to the laundry can be heated, for example, by means of an electrical heater (e.g. having one or more resistance heating elements) or by a heating light device directed into the drum. The heating light device may e.g. comprise at least one infrared heating lamp. The subsequently humid process air is then discharged to the outside.

Another kind of known washer-dryers uses a closed-loop process air circuit to apply a flow of dry and warm process air to the laundry generating humid process air, then to condensate the humid process air resulting in a dryer and cooler process air, then to re-heat the cooler process air, and then to re-apply the re-heated and dry process air to the laundry. Such a drying process is also called "air condensation drying" or "air circulation drying". Concerning the air condensation drying, at least the following three different methods can be differentiated:

### a) Condensation Using Ambient Air

In this case, condensation of the humid air is carried out by means of an air/air heat exchanger. In the air/air heat exchanger, heat is transferred from the humid air to cool ambient air (which are flowing in separate but thermally connected channels), thus cooling down the humid process air and lowering its humidity. The ambient air is then expelled back into the ambient. Such washer-dryers have the disadvantage that the surrounding room may be heated as well. Additionally, condensation using ambient air has low energy efficiency.

### b) Condensation Using Fresh Water

In this case, condensation of the humid air is carried out by cooling it with fresh, cool water taken from a water supply (e.g. tap water). This can be achieved in two ways, namely by 'indirect' water condensation or by 'direct' water condensation. The indirect water condensation refers to a method in which the humid process air coming from the laundry is cooled down and dried by passing through a water/process air heat exchanger with the cool water being one fluid and the humid air being the other fluid. The direct water condensation refers to a method in which the humid process air coming from the laundry is being cooled down and thus dried by crossing a cold water stream, typically in the form of a spray. In both cases, the water is subsequently removed from the washer-dryer and thus does not flow in a water circuit. These washer-dryers have the disadvantage of high water and energy consumption.

### c) Condensation Using a Heat Pump

Also, washer-dryers using a heat pump are known. The heat pump typically comprises a compressor, a condenser, an expansion valve and an evaporator forming a circuit in which refrigerant flows. In these washer-dryers, the process air to be applied to the laundry is heated by means of the hot condenser. The condenser acts as a refrigerant/process air heat exchanger in which the process air flows along heat transfer surfaces of the condenser.

The cooling and resultant condensation of the humid process air coming from the laundry is effected by passing it through heat transfer surfaces of the evaporator. The evaporator thus acts as another refrigerant/process air heat exchanger. These washer-dryers have the drawback that the heat pumps take up a significant volume of space, which in turn may lead to an undesirably voluminous device or to a reduction in load capacity of the washer-dryer to fit the heat pump into its housing or body.

US 2013/008049 A1 discloses a water/process air heat exchanger having a spray nozzle that is used to spray water into a process air channel to cool moist and warm process air coming from a drum.

EP 2 562 306 A1 discloses a dryer comprising a housing, a motor, a rotatably mounted drum, a closed-loop process air channel, a heat exchanger and a heater. The drying air is cooled and dehumidified by the heat exchanger. The heat exchanger is connected to a conduit system for passing water to dissipate heat from the heat exchanger.

EP 2 067 890 A1 discloses a dryer with a treatment chamber for articles to be dried, a process air circuit, wherein heated process air is moved by means of a blower above and through the articles to be dried, and a heat pump with a first heat exchanger, and with a secondary fluid circuit containing a secondary fluid provided between the process air circuit and the first heat exchanger. Said secondary fluid circuit comprises a second heat exchanger to exchange heat from said secondary fluid to water flowing in a water guide of a water-processing machine associated to said dryer.

It is the **object** of the present invention to at least partially overcome the problems associated with the prior art. It is a particular object of the present invention to provide a washer-dryer with an improved thermodynamic efficiency for the drying phase while enabling lowered water consumption and/or a particular compact design. It is another object to provide a washer-dryer which is particularly easy to assemble and/or easy to integrate in platforms of existing water condensation washer-dryers. It is yet another object to provide a related household appliance that provides particularly flexible drying modes.

The object is achieved according to the features of the independent claims. Advantageous facultative embodiments can be found in the dependent claims, the subsequent descripttion and the attached drawing.

The object is achieved by a household appliance, comprising a process air circuit for circulating process air, the process air circuit comprising a treatment chamber having an air inlet opening and an air outlet opening as well as a process air channel connecting the openings. The household appliance further comprises a heating device for heating the process air, and a water circuit comprising: (i) a water/process air heat exchanger adapted to cool down the process air flowing within the process air circuit, and (ii) a water circulation device for circulating the water of the water circuit.

This household appliance is able to dehumidify humid process air in an efficient manner. Also, a household appliance in form of a washer-dryer can be derived from existing washer-dryers using condensation by fresh water. The provision of the closed-loop water circuit can be implemented in a compact manner using inexpensive components. In the case of a washer-dryer, its conventional drain pump (or a pump advantageously having the same form factor) may be used as the water circulation device, thus again saving space. Also, either the existing water/process air heat exchanger of a conventional washer-dryer platform using the indirect condensation method may be modified or the water spray device of a conventional washer-dryer platform using the direct condensation method may be replaced by the water/process air heat exchanger, both replacements not needing additional space. The provision of the closed-loop water circuit advantageously enables - by its design as a closed loop - a particularly low water consumption.

The household appliance thus uses two thermally intersecting closed-loop circuits to achieve its objects, namely the process air circuit and the water circuit. The process air circuit and the water circuit thermally intersect at the water/process air heat exchanger.

It is an embodiment that the household appliance is a laundry care appliance, in particular a clothes drying appliance, in particular a washer-dryer or a clothes dryer. Thus, the goods to be dried may include clothes or laundry. The corresponding treatment chamber may be a drum, in particular a rotatable drum, in particular a horizontally rotatable drum. The drum may be positioned in a respective housing ("drum housing"). Alternatively, the household appliance may e.g. be a dishwasher. In this case, the goods to be dried may include dishes, cutlery etc.

The air inlet opening and/or the air outlet opening of the housing may have one or more sections or air holes.

The treatment chamber can be loaded with to be dried goods by a user, e.g. through a loading port that can be closed by a door.

The water / process air heat exchanger is a component of the water circuit. The water/process air heat exchanger may comprise at least one channel that channels water. Cool water can flow through the at least one channel and causes the warmer process air flowing through the water/process air heat exchanger (e.g. along heat transfer surfaces) to cool down. The water may be regarded as the primary fluid while the process air may be regarded as the secondary fluid.

The water / process air heat exchanger may be placed or positioned within the process air channel and/or may be integrated into at least one wall section of the process air channel.

The heating device for heating the process air may e.g. be an electrical heater (e.g. having one or more resistance heating elements) or a heating light device directed into the drum.

The process air circuit may comprise at least one additional heater (e.g. an electrical heater) to further heat the process air before it enters the treatment chamber. The process air circuit may comprise at least one fan to generate a flow or movement of the process air. In particular, within the process air channel, the process air may flow through the treatment chamber, then to the water/process air heat exchanger, then to the heating device (and possibly the additional heater) and then back into the treatment chamber.

The at least one channel of the water/process air heat exchanger may comprise at least one tube or pipe, e.g. including compact tubes. The tubes may be made of metal (e.g. copper and/or aluminium) or of plastic.

According to the invention the water/process air heat exchanger is made of at least one capillary tube mat. Up to now, capillary tube mats are known to be used for radiant cooling of buildings and for thermal building component activation. A capillary tube mat may be a composite structure of thin tubes (capillaries) with a distributor tube and a collector tube. Capillary tube mats are typically made of plastic and have the advantage that they are inexpensive, light, and easy to assemble. Since the capillary tubes are very thin-walled, a lower heat conductivity of plastic compared to metals has no adverse effect on the heat transmission. The plastic may e.g. be made of polypropylene which is highly resistant to many chemicals and therefore very durable. Polypropylene is also very easy to recycle. Additionally, the capillary tube mat may be mechanically flexible and may thus be easily shaped into a desired form and/or density of its capillaries by bending etc.

The capillary tube mat may have capillary tubes with an external diameter of less than 5 mm. This makes the mat very flexible. In particular, the individual capillary tubes of a yet unbent mat may be arranged in a grid with a spacing of 10 to 50 mm from each other. The at least one capillary tube mat may be produced by means of standard plastic-processing techniques such as extrusion, thermal plastic welding and injection molding.

The heating device can be fit in the air channel simply by mechanical pressure (e.g. clamping or clipping), by being screwed in, riveted, snap-fitted, or glued etc.

It is an embodiment that the water circuit comprises a water cooling device for cooling water of the water circuit, and wherein, the water cooling device is an evaporator of a heat pump and the heating device is a condenser of the heat pump. This allows running the household appliance in a particularly efficient manner. The water cooling device may be located at any position (e.g. on the top, at the rear, at the bottom, attached to the housing of the drum etc.) inside or outside the appliance, giving a high degree of design flexibility to provide a compact appliance. A household appliance in form of a heat pump washer-dryer can be derived from existing washer-dryers using condensation by fresh water. For example, starting from a washer-dryer using the direct or the indirect water condensation method, one can replace the conventional process air heater by the condenser of the heat pump and use the evaporator as cooling device to cool the water. Therefore, only additional space to provide the evaporator is needed to integrate a heat pump - which is known to be particularly energy efficient - into a conventional condensation washer-dryer platform. Thus, a conventional condensation washer-dryer can be modified by integrating a heat pump in a particularly compact manner.

In this embodiment, the household appliance thus uses three thermally intersecting closed-loop circuits to achieve its objects, namely one process air circuit, one water circuit, and one refrigerant circuit (i.e., the heat pump). The process air circuit and the water circuit thermally intersect at the water/process air heat exchanger. The process air circuit thermally intersects with the refrigerant circuit at the condenser, and the refrigerant circuit thermally intersects with the water circuit at the evaporator.

Also the condenser may be a conventional finned-tube exchanger or a fin-and-tube exchanger with pipes and/or made of copper and/or aluminium. Also, a so-called microchannel heat exchanger can be used, e.g. using compact tubes and/or capillary tube mats. In all cases, the refrigerant may be regarded as the primary fluid while the process air may be regarded as the secondary fluid. The condenser (refrigerant / process air heat exchanger) can be fit in the air channel simply by mechanical pressure (e.g. clamping or clipping), by being screwed in, riveted, snap-fitted, or glued etc.

It is an embodiment that the cooling device is positioned outside of the process air circuit. Thus, the cooling device is not heated by the process air. It follows that the cooling device can cool down the water circulating in the water circuit in a particularly efficient manner.

It is an embodiment that the cooling device (in particular evaporator) is a heat exchanger comprising a channel for channeling cooling fluid or coolant (in particular refrigerant of the heat pump) wherein the channel is immersed in the water of the water circuit. For example, the coolant channel is immersed in a water tank, the water tank in particular being part of the water circuit. In this case, a conventional finned tube exchanger or fin-and-tube exchanger as described for the heat exchanger acting as a heating device (in particular refrigerant / process air heat exchanger) can be used, wherein water may be regarded as the secondary fluid. Aluminum or steel are preferred materials for the tubes or pipes to avoid forming of copper oxides. Additionally, at least one channel for the coolant similar to a channel of a heat exchanger as used for the heating device and/or the water / process air heat exchanger can be used (e.g. without fins which amounts to using just a pipe coil). Also, to form a channel for the coolant, metal tubes may directly be joined (e.g. welded or glued) to a supporting metal plate (e.g. made from copper, aluminium or stainless steel) or a stamped metal plate heat exchanger may be used.

It is an additional or alternative embodiment that the water cooling device is a cross-flow heat exchanger comprising a channel for channeling the coolant (in particular refrigerant of the heat pump) and another channel for channeling the water. These two channels are connected in a heat-exchanging manner. Here, cooling fluid or coolant and water are exchanging heat through a conductive surface while having a relative counterflow or crossflow movement between the coolant and the water. Plate heat exchangers or tube-in-tube heat exchangers are only two examples of this kind. Alternatively, the water cooling device may be a water / ambient air heat exchanger with the ambient air being the coolant or cooling fluid.

A piping system that connects heat pump components (evaporator, condenser, compressor, expansion valve ...) may e.g. be made of bended copper pipes, be made of flexible hoses made of stainless steel, and/or be made of thermo-stable polymers.

A fluidically hermetical connection between the heat pump components may e.g. be achieved by brazing, soldering or eutectic processes. Also, a connection can be achieved by using a mechanical non-reversible hermetical pressure mechanism such as Vulkan Lokring. In another variant, a hermetical and non-reversible mechanical connection may be achieved using thermal shock. In another variant, a connection can be achieved by screwing parts together.

It is an embodiment that the water circuit comprises or is connected to a switchable (e.g. by a valve) water inlet for connection to a water supply (e.g. providing tap water) and a switchable water outlet. This advantageously enables a precise exchange of tap water and water circulating in the water circuit. This can be used e.g. to set and/or control the temperature of the water flowing in the water circuit.

According to the invention a water outlet opening of the water/process air heat exchanger opens into the process air circuit. As a result, the water circuit and the process air circuit partly coincide. This gives the advantage of a particularly compact design and also enables a particular simple and low-cost design of the water circuit. For example, the water may partly flow through the process air circuit before it is collected to be re-introduced into another part of the water circuit.

It is an embodiment that the household appliance further comprises a sump for collecting "free" water arising in the process air circuit, and a water circulation pump for pumping the water from the sump to the water/process air heat exchanger. This embodiment gives the advantage of having a particularly compact and robust design. The "free" water can be understood water to be basically free to move and is thus not bound, e.g. in wet clothes. The free water may e.g. comprise condensed water or "condensate". The sump may be a water collection device (e.g., a water tank or water reservoir). The water collection device may be connected to a floor of the treatment chamber, e.g. to a floor of a housing of a drum of a washer-dryer. In particular, the water collection device may be connected to a suction side of the pump while the water / process air heat exchanger is directly or indirectly (i.e., via at least one another functional element, e.g. via at least one valve and/or the evaporator) connected to a pressure side of the pump.

The water stored in the water collection device may be able to draw thermal energy from its surrounding or ambient thus allowing a following washing and drying cycle to start at a higher water temperature than that of tap water. This advantageously achieves further water savings and improves energy efficiency. The water collection device may be placed inside the appliance or may be integrated in a bottom part of the process air circuit.

It is an embodiment that an outlet opening of the water/process air heat exchanger is directly connected to the water circulation pump, e.g. without the water being collected in the sump. This allows a particularly compact design. In one variant, the water circuit and the process air circuit partly coincide. In this variant, the water circulation pump also circulates condensate as the water. In another variant, the water circuit is fluidically separate from the process air circuit. In that variant, the water circuit and the process air circuit do not coincide and only thermally intersect at the water/process air heat exchanger. That variant gives the advantage that the water circulated in the water circuit is not mixed with the condensate and thus does not contain lint originating from the clothes. In one embodiment, the household appliance may comprise a water circulation device (e.g. a water circulation pump) and a pump ("drain pump") for pumping water appearing in the process air circuit (e.g. condensate and/or spray water from a cleaning device) out of the household appliance, e.g. into a drain. The water circulation pump may also be connectable to the drain, e.g. via a valve, to drain the water circuit.

It is an embodiment that the water circuit comprises at least one filter. This allows holding back lint, fluffs, hairs, dirt etc. (the filter may thus also be called a lint filter). This in turn protects components of the process air circuit and/or of the water circuit that may be sensitive to clogs produced by lint etc. Additionally, the lint could accumulate on the secondary surface (fins) of the water/process air heat exchanger.

The at least one filter can be positioned, e.g., after the sump, before a valve, before the water cooling device (in particular evaporator) and/or after the water/process air heat exchanger. In particular, if the filter is positioned in the process air circuit, it is an embodiment that the filter is highly permeable for the process air in order to reduce resistance to the flow of the process air.

In particular, a filter may be present in a discharge pipe or at an entrance of the discharge pipe of the water collection device in order to avoid that lint etc. reaches the water circulation pump and/or the water cooling device (in particular evaporator and water / refrigerant heat exchanger, respectively). Advantageously, this filter is accessible for a customer. For example, this filter can be placed inside the water collection device.

Additionally or alternatively, a filter may be present between the water circulation pump and the water cooling device (in particular the refrigerant/water heat exchanger or evaporator). Advantageously, this filter is accessible for a customer.

Also, a filter may be present in the process air channel between the water/ air heat exchanger and the treatment chamber.

To remove lint from at least one filter, the water circulation pump may be reversed to create a water flow in an opposite direction shortly before water is to be drained from the appliance through a drain or water exhaust of the appliance, e.g. by means of a drain pump.

The heating device, in particular if implemented as a heat exchanger, in particular if implemented as a refrigerant-air heat exchanger acting as the condenser, may also be sensitive to secondary surface (fins) clogging due to lint in the process air. A filtering or cleaning solution (for example, an additional spraying system) in addition to the water-air heat exchanger may be used to ensure proper performance during lifetime.

Generally, heat insulation may be present to decrease heat losses, e.g. from the process air circuit and/or the appliance. To this effect, heat insulation elements can be either glued, riveted, screwed or snap fitted etc. to the desired surface. For example, the water cooling device (in particular evaporator and water / refrigerant heat exchanger, respectively) may be insulated to avoid thermal losses and/or condensation inside the washer-dryer cabinet.

By the above described household appliance, inter alia, one or more of the following advantages can be achieved: An improved thermodynamic efficiency for the drying phase is achieved compared to conventional washer-dryers and therefore gaining an appliance energy efficiency improvement. The recirculation of waste water leads to lower water consumption during the drying cycles. A better conjoint performance of the drying modes in the same appliance is achieved. Integrating the described condensation system into existing condensation concepts using a heat pump is simple. The heat pump can be integrated as part of an existing water condensation washer-dryer platform with reduced complexity and low effort for the heat pump integration. Flexibility and adaptability of the design: Different drying speeds and efficiencies can be devised, utilizing different refrigerants, regulating the temperature of the water by providing different mixing rates (between waste water and mains water), cooling circuit components settings and/or complementary heating devices. The evaporator is not necessarily integrated inside the appliance.

The above described features and advantages of the invention as well as their kind of implementation will now be schematically described in more detail by at least one embodiment in the context of one or more figures as shown in the drawing attached.
- Fig.1: shows a cross-sectional side view of a household appliance according to a first embodiment;
- Fig.2: shows a cross-sectional side view of a household appliance according to a second embodiment;
- Fig.3: shows a side view of a water/process air heat exchanger; and
- Fig. 4: shows a third embodiment that closely resembles the first embodiment.

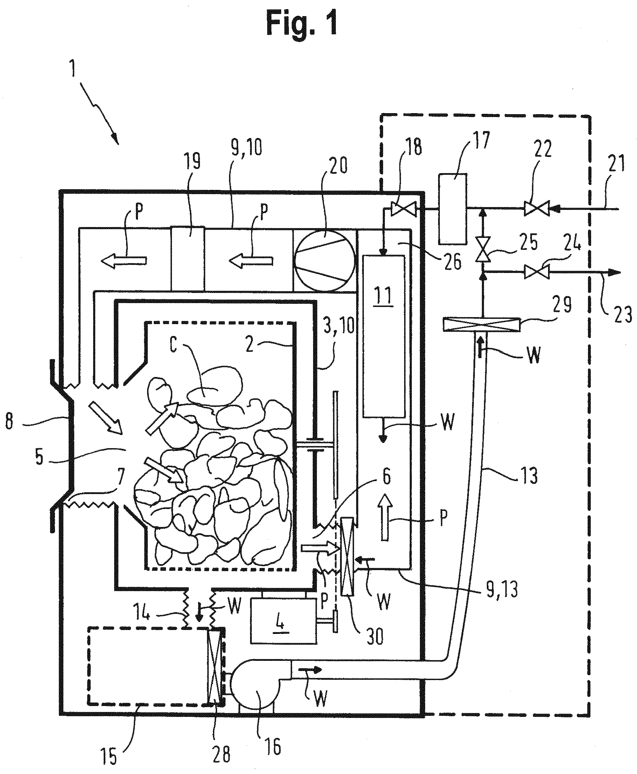

**Fig.1** shows a cross-sectional side view of a household appliance in form of a washer-dryer 1 according to a first embodiment. The washer-dryer 1 comprises a treatment chamber 2, 3 which, in turn, comprises a frontally open drum 2 and a drum housing 3. The drum 2 is horizontally rotatable, e.g. by a motor 4.

The drum housing 3 comprises a frontal air inlet opening 5 and an air outlet opening 6 on the back. The drum 2 can be loaded with laundry or clothes C through the air inlet opening 5 via a loading port 7. The loading port 7 can be closed by a front door 8. The air inlet opening 5 and the air outlet opening 6 are connected by a process air channel 9. The treatment chamber 2, 3 (or at least its housing 3) and the process air channel 9 form a process air circuit 10.

The washer-dryer 1 further comprises a water/process air heat exchanger 11 adapted to cool down process air P (as indicated by the large arrows) flowing within the process air circuit 10. The water W flows out of the water/process air heat exchanger 11 into the process air channel 9, here: into a vertical section of the process air channel 9.

The water/process air heat exchanger 11 is positioned within the process air channel 9 downstream the air outlet opening 6 such that warm, humid process air P coming from the drum 2 can be cooled down by these condensation components 11. The water/process air heat exchanger 11 may be regarded as a component of the process air circuit 10.

The water/process air heat exchanger 11 is also a component of a closed-loop water circuit 13. The water circuit 13 further comprises a section of the process air circuit 10, i.e. the section of the process air channel 9 and the housing 3 in which the water W coming out of the water/process air heat exchanger 11 is flowing. In the shown embodiment, this is a section that leads from water/process air heat exchanger 11 to a water outlet 14 at the bottom of the housing 3. Therefore, in this section, the water circuit 13 and the process air circuit 10 coincide.

The water W flowing into the water outlet 14 is collected in a water collection device in form of a water reservoir 15. The water reservoir 15 is placed below the housing 3 and is connected to a suction side of a water circulation pump 16. The water circulation pump 16 pumps the water W to a water cooling device in form of an evaporator 17 of a heat pump. From the evaporator 17 the water W can flow to the water/process air heat exchanger 11 depending on a valve position (open/close/intermediate position) of a valve 18 that is placed in the water circuit 13 between the evaporator 17 and the water/process air heat exchanger 11.

Of the heat pump, only its condenser 19 is also shown. The condenser 19 is placed in the process air channel 9 between the air cooling components 10, 11 and the housing 3 (and thus also the drum 2). Not shown are e.g. a compressor and an expansion valve of the heat pump. The working fluid of the heat pump is a refrigerant (not shown).

Thus, there are three closed-loop fluid circuits, namely the process air circuit 10, the water circuit 13, and the refrigerant circuit (i.e., the heat pump 17, 19).

Regarding the process air circuit 10, a flow of the process air P can be created by a blower or fan 20. Thus, warm and relatively dry process air P can pick up water W from the wet clothes C and thereby increases its humidity. The now warm and humid process air P flows through the air outlet opening 6 into the process air channel 9. This process air P then flows through the water/process air heat exchanger 11, thereby cooling down. By cooling down, the process air P condenses or rains out, thus producing condensate that contributes to the volume of water W. The now dehumidified and thus cooler and dryer process air P flows to the condenser 19 which heats up the process air P. The now warm and dry process air P is re-introduced into the housing 3 and drum 2, respectively, thus starting this cycle anew.

Regarding the water circuit 13, the water W running down the process air channel 9 may comprise tap water and condensate which is collected in the water reservoir 15. This water W may be warmer than fresh tap water and may be further warmed up by its ambient. The water W is then pumped to the evaporator 17 where it is cooled down. From the evaporator 17, the water W then flows through the water/process air heat exchanger 11 and then back into the process air channel 9.

Regarding the refrigerant circuit (the heat pump 17, 19), the refrigerant entering the evaporator 17 remains on a relatively low temperature while the refrigerant entering the condenser 19 remains on a relatively high temperature. In particular, to enable the low temperatures of the evaporator 17, it is advantageous that the evaporator 17 is positioned outside the process air circuit 10 and may even be positioned outside of an outer housing of the washer-dryer 1.

Thus, the process air circuit 10 and the water circuit 13 thermally intersect in the section of the process air circuit 10 in which also the water W flows. The process air circuit 10 thermally intersects with the refrigerant circuit / heat pump 17, 19 at the condenser 19, and the refrigerant circuit / heat pump 17, 19 thermally intersects with the water circuit 13 at the evaporator 17.

In particular, the evaporator 17 may be a heat exchanger comprising a channel for channeling the refrigerant which channel is at least partially immersed in the water W of the water circuit 13 in a respective water tank (not shown). Alternatively, the evaporator 17 is a cross-flow heat exchanger comprising a channel for channeling the refrigerant and another channel for channeling the water W, wherein both channels are in thermal or heat exchanging communication.

Optionally, the temperature of the water W can also be adjusted by the water circuit 13 comprising or being connected to a tap water inlet 21 (switchable via a valve 22) and to a water outlet 23 (switchable via a valve 24). Within the water circuit 13 and positioned between the branches to the tap water inlet 21 (also called 'net') and to the water outlet 23 (also called 'drain') is positioned another valve 25. Thus, cool tap water can be introduced into the water circuit 13 through the water inlet 21 and used water W can be discharged from the water circuit 13 through the water outlet 23. This exchange of water can e.g. be initiated if the temperature of the water W in the water circuit 13 exceeds a certain threshold value (to be measured e.g. by a respective temperature sensor, not shown). Another advantage of a water exchange can be a discharge of lint containing used water W.

In order to reduce the amount of lint of the water W circulating in the water circuit 13, the water circuit 13 may comprise several lint filters 28 to 30. For example, a lint filter 28 is placed within the water reservoir 15 at the entrance to the water circulation pump 16. Additionally or alternatively, a lint filter 29 may be placed between the water circulation pump 16 and the evaporator 17, more specifically between the water circulation pump 16 and the valve 25. Additionally or alternatively, a lint filter 30 may be placed within the process air channel 9 between the housing 3 and the water/process air heat exchanger 11. The lint filter 30 may also be used to remove lint from the process air P.

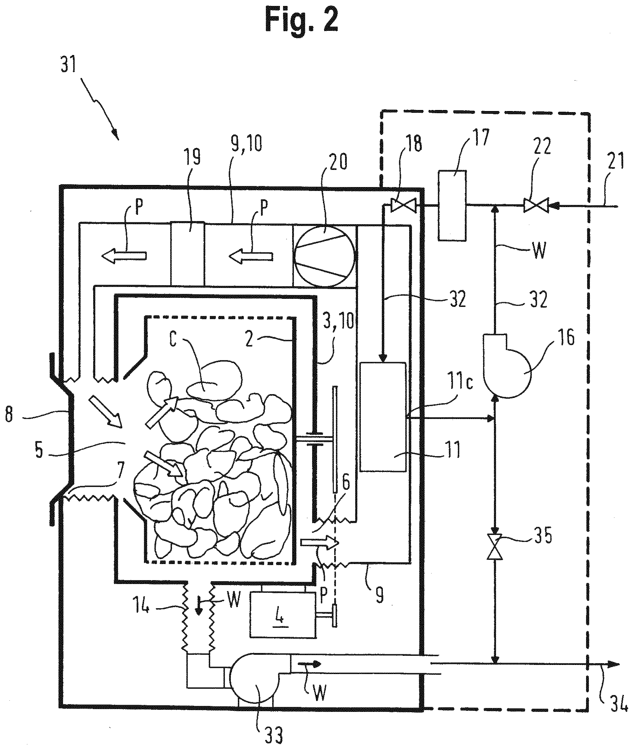

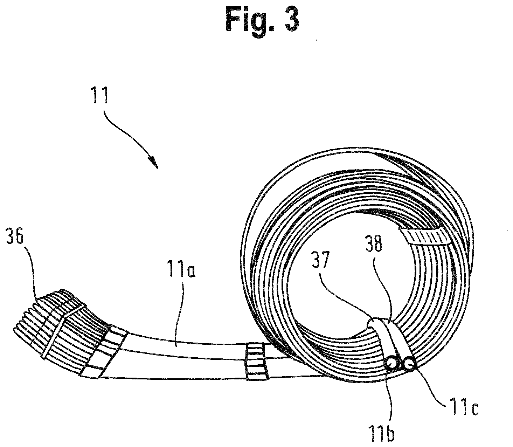

**Fig.2** shows a cross-sectional side view of a household appliance in form of a washer-dryer 31 according to a second embodiment. The washer-dryer 31 distinguishes itself from the washer-dryer 1 by the omission of the water reservoir 15 and the filters 28 to 30. Also, a water circuit 32 is fluidically separated from the process air circuit 10. The water circuit 32 now directly leads from the water outlet opening 11c (see fig.3) of the water/process air heat exchanger 11 to a suction side of the water circulation pump 16. The pressure side of the water circulation pump 16 is connected to the evaporator 17.

The water outlet 14 at the bottom of the housing 3 is now connected with a suction side of a drain pump 33. The pressure side of the drain pump 33 is connected to a drain 34. The water outlet opening 11c of the water/process air heat exchanger 11 and the suction side of the water circulation pump 16 are connected to the drain 34 via a valve 35. Thus, the water W from the water circuit 32 can be drained via the valve 35 into the drain 34.

**Fig.3** shows a side view of one possible variant of the water/process air heat exchanger 11. The water/process air heat exchanger 11 is a capillary tube mat made of plastic and comprises a long, e.g. curved, section ("tube section") 11a comprising a multitude of capillaries 36, a distributor tube 37 comprising a water inlet opening 11b (e.g. connected to the valve 18), and a collector tube 38 comprising a water outlet opening 11c (e.g. connected to the evaporator 17 of fig.2 or left open according to fig.1). The flexible capillaries 36 may be arranged in a fluidically parallel arrangement.

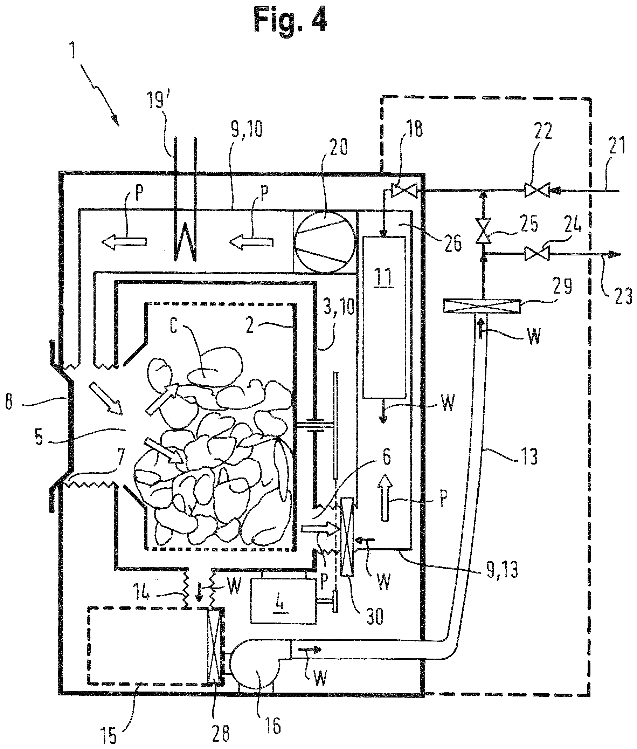

**Fig. 4** shows a third embodiment which closely resembles the first embodiment of Fig. 1 and wherein the heat pump 17, 19 has been replaced by a single electric heater 19'. In all other respects the elements of the third embodiment are similar to the elements of the first embodiments. Accordingly the detailed explanation of the first embodiment as above applies, relieving of any need for repeating in the context of Fig. 4 insofar.

In the embodiment of Fig. 4 most features of heat exchange between water and process air are retained within a simplified and cheap embodiment that includes no heat pump but relies on an electric heater 19' as a simple and cheap means for heating the process air after having extracted the humidity. The cooling effect applied relies on the temperature difference between the process air and the tap water entered into the process via inlet 21.

Of course, the invention is not restricted to the embodiments shown and described.

For example, the washer-dryer 1 may be arranged without the filters 28 to 30 while the washer-dryer 31 may be arranged with one filter out of the group of the filters 28 to 30. Also, as another example, the valve 25 may not be present. Furthermore, the washer-dryer 1 may be arranged without the water reservoir 15 while the washer-dryer 31 may be arranged with a water reservoir 15. Also, the fan 20 may be placed at another location within the process air channel 9. Generally, a clothes dryer instead of a washer-dryer may be adapted to use the described invention.

Also, the washer-dryers 1 and 31 may lack the heat pump and may employ conventional process air heating devices and water cooling devices.

### LIST OF REFERENCE NUMERALS

- 1: household appliance, washer-dryer
- 2: drum
- 3: housing
- 4: motor
- 5: air inlet opening
- 6: air outlet opening
- 7: loading port
- 8: door
- 9: process air channel
- 10: process air circuit
- 11: water/process air heat exchanger
- 11a: tube section
- 11b: water inlet opening
- 11c: water outlet opening
- 13: water circuit
- 14: water outlet
- 15: water reservoir
- 16: water circulation pump
- 17: evaporator
- 18: valve
- 19: heating device, condenser
- 19': heating device, electric heater
- 20: fan
- 21: tap water inlet
- 22: valve
- 23: water outlet
- 24: valve
- 25: valve
- 27: valve
- 28: lint filter
- 29: lint filter
- 30: lint filter
- 31: washer-dryer
- 32: water circuit
- 33: drain pump
- 34: drain
- 35: valve
- 36: capillary
- 37: distributor tube
- 38: collector tube
- C: clothes
- P: process air
- W: water

## Claims

1. A household appliance (1; 31), in particular washer-dryer, comprising:
- a process air circuit (10) for circulating process air (P) comprising a treatment chamber (2, 3) having an air inlet opening (5) and an air outlet opening (6) and a process air channel (9) connecting the openings (5, 6),
- a heating device (19, 19') for heating the process air (P), and
- a water circuit (13) comprising: a water/process air heat exchanger (11) adapted to cool process air (P) flowing within the process air circuit (10), and a water circulation device (16) for circulating the water (W) in the water circuit (13) **characterized in that**
- the water / process air heat exchanger (11) is made of at least one capillary tube mat (11a to 11c, 36, 37, 38) being positioned within the process air channel (9) and/or being integrated into at least one wall section of the process air channel (9) and
- the water/process air heat exchanger (11) comprises a water outlet opening (11c) that opens into the process air circuit (10) such that the water circuit (13) and the process air circuit (10) partly coincide.

2. The household appliance (1; 31) according to claim 1, wherein the water circuit (13) comprises a water cooling device (17) for cooling water (W) of the water circuit (13), and wherein the cooling device (17) is an evaporator of a heat pump (17, 19) and the heating device (19, 19') is a condenser (19) of the heat pump (17, 19).

3. The household appliance (1; 31) according to claim 2, wherein the cooling device (17) is positioned outside the process air circuit (10).

4. The household appliance (1; 31) according to any of the claims 2 and 3, wherein the water cooling device (17) comprises a heat exchanger (17) comprising a channel for channeling cooling fluid that is immersed in water (W) of the water circuit (13).

5. The household appliance (1; 31) according to any of the claims 2 and 3, wherein the water cooling device (17) comprises a cross-flow heat exchanger (17) comprising a channel for channeling cooling fluid and another channel for channeling the water (W).

6. The household appliance (1; 31) according to any of the preceding claims, wherein the water circuit (13) is connected to a switchable water inlet (21) for tap water and a switchable water outlet (23).

7. The household (1) appliance according to any of the preceding claims, further comprising a sump (15) for collecting water (W) arising in the process air circuit (10), wherein the water circulation device (16) is adapted to pump the water (W) from the sump (15) to the water/process air heat exchanger (11).

8. The household appliance (1; 31) according to any of the preceding claims, wherein the water circuit (13) comprises at least one filter (28, 29, 30).

## Patentansprüche

1. Haushaltsgerät (1; 31), insbesondere Waschtrockner, mit Folgendem:
- einem Prozessluftkreislauf (10) zum Umwälzen von Prozessluft (P), der eine Behandlungskammer (2, 3) mit einer Lufteinlassöffnung (5) und einer Luftauslassöffnung (6) und einem die Öffnungen (5, 6) verbindenden Prozessluftkanal (9) umfasst,
- einer Heizvorrichtung (19, 19') zum Erhitzen der Prozessluft (P) und
- einem Wasserkreislauf (13), der Folgendes umfasst: einen Wasser-Prozessluft-Wärmetauscher (11), der so ausgelegt ist, dass er im Prozessluftkreislauf (10) strömende Prozessluft (P) kühlt, und eine Wasserumwälzvorrichtung (16) zum Umwälzen von Wasser (W) im Wasserkreislauf (13), **dadurch gekennzeichnet, dass**
- der Wasser-Prozessluft-Wärmetauscher (11) aus mindestens einer Kapillarrohrmatte (11a bis 11c, 36, 37, 38) aufgebaut ist, die in dem Prozessluftkanal (9) positioniert und/oder in mindestens einen Wandabschnitt des Prozessluftkanals (9) integriert ist, und
- der Wasser-Prozessluft-Wärmetauscher (11) eine Wasserauslassöffnung (11c) umfasst, die in den Prozessluftkreislauf (10) mündet, so dass sich der Wasserkreislauf (13) und der Prozessluftkreislauf (10) teilweise überschneiden.

2. Haushaltsgerät (1; 31) nach Anspruch 1, wobei der Wasserkreislauf (13) eine Wasserkühlvorrichtung (17) zum Kühlen von Wasser (W) aus dem Wasserkreislauf (13) umfasst und es sich bei der Kühlvorrichtung (17) um einen Verdampfer einer Wärmepumpe (17, 19) und bei der Heizvorrichtung (19, 19') um einen Verflüssiger (19) der Wärmepumpe (17, 19) handelt.

3. Haushaltsgerät (1; 31) nach Anspruch 2, wobei die Kühlvorrichtung (17) außerhalb des Prozessluftkreislaufs (10) angeordnet ist.

4. Haushaltsgerät (1; 31) nach einem der Ansprüche 2 und 3, wobei die Wasserkühlvorrichtung (17) einen Wärmetauscher (17) mit einem Kanal zum Leiten von Kühlfluid umfasst, der von Wasser (W) aus dem Wasserkreislauf (13) umgeben ist.

5. Haushaltsgerät (1; 31) nach einem der Ansprüche 2 und 3, wobei die Wasserkühlvorrichtung (17) einen Kreuzstromwärmetauscher (17) mit einem Kanal zum Leiten von Kühlfluid und einem weiteren Kanal zum Leiten des Wassers (W) umfasst.

6. Haushaltsgerät (1; 31) nach einem der vorhergehenden Ansprüche, wobei der Wasserkreislauf (13) mit einem schaltbaren Wassereinlass (21) für Leitungswasser und einem schaltbaren Wasserauslass (23) verbunden ist.

7. Haushaltsgerät (1) nach einem der vorhergehenden Ansprüche, das ferner einen Pumpensumpf (15) zum Sammeln von Wasser (W) aus dem Prozessluftkreislauf (10) umfasst, wobei die Wasserumwälzvorrichtung (16) so ausgelegt ist, dass sie das Wasser (W) aus dem Pumpensumpf (15) zum Wasser-Prozessluft-Wärmetauscher (11) pumpt.

8. Haushaltsgerät (1; 31) nach einem der vorhergehenden Ansprüche, wobei der Wasserkreislauf (13) mindestens einen Filter (28, 29, 30) umfasst.

## Revendications

1. Appareil ménager (1 ; 31), en particulier lave-linge séchant, comprenant :
- un circuit d'air de traitement (10) pour la circulation de l'air de traitement (P) comprenant une chambre de traitement (2, 3) ayant un orifice d'entrée d'air (5) et un orifice de sortie d'air (6) et un conduit d'air de traitement (9) reliant les orifices (5, 6),
- un dispositif de chauffage (19, 19') pour chauffer l'air de traitement (P), et
- un circuit d'eau (13) comprenant : un échangeur à chaleur eau/air de traitement (11) adapté afin de refroidir l'air de traitement (P) s'écoulant dans le circuit d'air de traitement (10), et un dispositif de circulation d'eau (16) pour la circulation de l'eau (W) dans le circuit d'eau (13), **caractérisé en ce que**
- l'échangeur de chaleur eau/air de traitement (11) est composé d'au moins un tapis de tubes capillaires (11a à 11c, 36, 37, 38) positionné à l'intérieur du conduit d'air de traitement (9) et/ou intégré à l'intérieur d'au moins une section de paroi du conduit d'air de traitement (9) et
- l'échangeur de chaleur eau/air de traitement (11) comprend un orifice de sortie d'eau (11c) qui débouche dans le circuit d'air de traitement (10) de sorte que le circuit d'eau (13) et le circuit d'air de traitement (10) coïncident partiellement.

2. Appareil ménager (1 ; 31) selon la revendication 1, dans lequel le circuit d'eau (13) comprend un dispositif de refroidissement d'eau (17) pour refroidir l'eau (W) du circuit d'eau (13), et dans lequel le dispositif de refroidissement (17) est un évaporateur d'une pompe à chaleur (17, 19) et le dispositif de chauffage (19, 19') est un condenseur (19) de la pompe à chaleur (17, 19).

3. Appareil ménager (1 ; 31) selon la revendication 2, dans lequel le dispositif de refroidissement (17) est positionné à l'extérieur du circuit d'air de traitement (10).

4. Appareil ménager (1 ; 31) selon l'une quelconque des revendications 2 et 3, dans lequel le dispositif de refroidissement d'eau (17) comprend un échangeur de chaleur (17) comprenant un conduit pour acheminer le fluide de refroidissement immergé dans l'eau (W) du circuit d'eau (13).

5. Appareil ménager (1 ; 31) selon l'une quelconque des revendications 2 et 3, dans lequel le dispositif de refroidissement d'eau (17) comprend un échangeur de chaleur à courants croisés (17) comprenant un conduit pour acheminer le fluide de refroidissement et un autre conduit pour acheminer l'eau (W).

6. Appareil ménager (1 ; 31) selon l'une quelconque des revendications précédentes, dans lequel le circuit d'eau (13) est relié à une entrée d'eau commutable (21) pour l'eau de distribution et une sortie d'eau commutable (23).

7. Appareil ménager (1) selon l'une quelconque des revendications précédentes, comprenant en outre un bassin collecteur (15) pour collecter l'eau (W) produite dans le circuit d'air de traitement (10), dans lequel le dispositif de circulation d'eau (16) est adapté afin de pomper l'eau (W) du bassin collecteur (15) vers l'échangeur de chaleur eau/air de traitement (11).

8. Appareil ménager (1 ; 31) selon l'une quelconque des revendications précédentes, dans lequel le circuit d'eau (13) comprend au moins un filtre (28, 29, 30).
